# EUROPÄISCHE PATENTSCHRIFT

(11) **EP 3 666 559 B1**
(45) Veröffentlichungstag und Bekanntmachung des Hinweises auf die Patenterteilung: **16.08.2023**
(21) Anmeldenummer: 19213852.7
(22) Anmeldetag: 05.12.2019
(51) Int. Cl.: B60D 1/06, B60D 1/62, B60D 1/54, G01L 1/12, G01L 5/13, B60D 1/24

(54) **KUPPLUNGSEINHEIT**
COUPLING UNIT
UNITÉ D'EMBRAYAGE

(30) Priorität: 11.12.2018 DE 102018131737
(43) Veröffentlichungstag der Anmeldung: 17.06.2020
(73) Patentinhaber: ACPS Automotive GmbH, 74379 Ingersheim (DE)
(72) Erfinder: Gentner, Wolfgang, 71711 Steinheim (DE); Kaufmann, Alexander, 74336 Brackenheim (DE); Widmann, Dr. Michael, 71229 Leonberg (DE)
(74) Vertreter: Hoeger, Stellrecht & Partner Patentanwälte mbB

(56) Entgegenhaltungen:
- EP-A1- 2 793 009
- EP-A1- 3 379 222
- DE-A1-102014 217 801
- DE-A1-102016 117 017

## Beschreibung

Die Erfindung betrifft eine heckseitig an einer Fahrzeugkarosserie montierbare Kupplungseinheit, die eine Trägereinheit umfasst, welche ihrerseits von einer Stoßfängereinheit verdeckt an der Fahrzeugkarosserie montierbar ist, und die einen von der Trägereinheit gehaltenen Ankuppelarm zum Ankuppeln eines Anhängers oder eines Hecklastenträgers umfasst, wobei an mechanisch durch den angekuppelten Anhänger oder den angekuppelten Hecklastenträger belasteten Abschnitten der Kupplungseinheit mindestens ein Krafterfassungsbereich vorgesehen ist, in welchem ein diesem Krafterfassungsbereich zugeordneter Sensor mittels des magnetoelastischen Effekts die auf diesen Krafterfassungsbereich einwirkende mechanische Belastung erfasst.

Die EP 3 379 222 A2, die EP 2 793 009 A1 und die DE 10 2014 217 801 A1 offenbaren Kupplungseinheiten mit den vorstehend genannten Merkmalen.

Der Erfindung liegt daher die Aufgabe zugrunde, eine Kupplungseinheit der eingangs beschriebenen Art derart zu verbessern, dass in einfacher Weise eine Erfassung der mechanischen Belastungen der Kupplungseinheit möglich ist.

Diese Aufgabe wird bei einer Kupplungseinheit der eingangs beschriebenen Art durch die Merkmale des Anspruchs 1 gelöst.

Der Vorteil der erfindungsgemäßen Lösung ist darin zu sehen, dass ein Sensor, der mittels des magnetoelastischen Effekts mechanische Belastungen erfasst, in einfacher Weise montierbar ist und zuverlässig arbeitet und im Übrigen die Eigenschaft hat, mechanische Belastungen mit guten Signal Rauschverhältnis zu erfassen, die keine signifikanten Deformationen des belasteten Abschnitts zur Folge haben müssen, beispielsweise weil der belastete Abschnitt so dimensioniert ist, dass er bei den auftretenden Belastungen nur unwesentlich deformiert wird.

Dies liegt daran, dass die mechanischen Belastungen zu einer Veränderung der magnetischen Permeabilität im Material des Krafterfassungsbereichs führen, die ein erfindungsgemäßer Sensor mittels des magnetoelastischen Effekts einfach erfassen kann.

Durch die Anordnung des mindestens einen Krafterfassungsbereichs an dem Ankuppelarm ist eine besonders einfache Lösung dadurch geschaffen, dass der Ankuppelarm eine Tragstruktur aufweist, die mit einem ersten Endbereich mit der Trägereinheit verbunden ist und die an einem zweiten Endbereich ein Kuppelelement, beispielsweise ausgebildet als Kupplungskugel, trägt, wobei die Tragstruktur eine den ersten Endbereich mit dem zweiten Endbereich verbindende und den zweiten Endbereich relativ zum ersten Endbereich abstützende Strebenstruktur umfasst, welche sich in der Arbeitsstellung des Ankuppelarms in einer geometrischen und sich zu einer Mittelachse des Kupplungselements parallel erstreckenden Mittelfläche ausdehnt und welche jeweils von einem Endbereich zum anderen Endbereich verlaufende Längsstreben aufweist, zwischen denen sich mindestens ein quer zu den Längsstreben verlaufendes Verbindungselement erstreckt, und wobei zwischen den Längsstreben mindestens ein sich quer zur geometrischen Mittelfläche erstreckender Freiraum liegt.

Eine derartige Ausbildung der Tragstruktur hat den Vorteil, dass diese die Möglichkeit eröffnet, die Masse des Ankuppelelements bei nach wie vor ausreichender Stabilität zu reduzieren.

Eine für die Durchführung der Erfassung der mechanischen Belastung günstige Lösung sieht vor, dass der mindestens eine Krafterfassungsbereich eine Einwirkungsfläche aufweist, über welche der Sensor ein Magnetfeld in eine die Einwirkungsfläche tragende und der einwirkenden mechanischen Belastung ausgesetzte Detektionsschicht des Krafterfassungsbereichs einkoppelt, um mittels des magnetoelastischen Effekts die in dieser Detektionsschicht wirkende Belastung zu erfassen.

Bei der in der Detektionsschicht wirkenden Belastung kann es sich um eine Zugbelastung und/oder eine Druckbelastung und/oder eine Torsionsbelastung handeln.

Die Belastung kann ungefähr parallel zur Einwirkungsfläche verlaufen.

Es besteht aber auch die Möglichkeit, Belastungen zu erfassen, die quer zur Einwirkungsfläche verlaufen.

Hinsichtlich der Anordnung der Einwirkungsfläche des Krafterfassungsbereichs sind ebenfalls die unterschiedlichsten Lösungen denkbar.

So sieht eine vorteilhafte Lösung vor, dass die dem Krafterfassungsbereich zugeordnete Einwirkungsfläche an einer Außenseite des Ankuppelarms liegt.

Dabei kann die Außenseite des Ankuppelarms, an welchem die Einwirkungsfläche liegt, in einer Arbeitsstellung des Ankuppelarms ungefähr quer zu einer vertikalen Längsmittelebene des Ankuppelarms verlaufen.

Alternativ oder ergänzend dazu besteht auch die Möglichkeit, dass die Außenseite, in welcher die Einwirkungsfläche des Krafterfassungsbereichs liegt, in einer Arbeitsstellung des Ankuppelarms ungefähr in Richtung parallel zu einer vertikalen Längsmittelebene verläuft, wobei ein ungefähr paralleler Verlauf Abweichungen von ± 30° noch umfassen soll, und im Übrigen auch noch eine gewölbte Ausbildung der Außenseite umfassen kann.

Alternativ oder ergänzend zur Anordnung der Einwirkungsfläche an einer Außenseite des Ankoppelarms sieht eine weitere Lösung vor, dass die dem Krafterfassungsbereich zugeordnete Einwirkungsfläche in einem von dem Ankuppelarm gebildeten Freiraum desselben liegt.

Dabei ist von einem Freiraum des Ankuppelraums ein Raum zu verstehen, welcher durch eine Öffnung in einer Außenkontur des Ankuppelarms zugänglich ist und in diesen eindringt.

Eine vorteilhafte Ausgestaltung sieht vor, dass sich die Strebenstruktur in der Arbeitsstellung beiderseits der Mittelfläche ausdehnt.

Insbesondere ist es dabei vorteilhaft, wenn eine in der Arbeitsstellung des Ankuppelarms einer Fahrbahn zugewandte Längsstrebe eine größere Längenausdehnung aufweist als eine der Fahrbahn abgewandte Längsstrebe.

Ferner ist zweckmäßigerweise vorgesehen, dass die der Fahrbahn zugewandte Längsstrebe sich beiderseits der geometrischen Mittelfläche erstreckt.

Besonders günstig ist es, wenn die der Fahrbahn zugewandte Längsstrebe sich symmetrisch zur geometrischen Mittelfläche erstreckt.

Ferner ist vorzugsweise vorgesehen, dass ein in der Arbeitsstellung der Fahrbahn abgewandte Längsstrebe sich beiderseits der geometrischen Mittelfläche erstreckt.

Besonders günstig ist es auch hier, wenn die der Fahrbahn abgewandte Längsstrebe sich symmetrisch zur geometrischen Mittelfläche erstreckt.

Ferner ist vorzugsweise vorgesehen, dass auf mindestens einer Seite eines Verbindungselements mindestens ein sich in der Strebenstruktur quer zur Mittelfläche erstreckender Freiraum liegt.

Ferner sieht eine besonders günstige Lösung vor, dass die Strebenstruktur mindestens einen Freiraum aufweist, der die Strebenstruktur in Richtung quer zur Mittelfläche insgesamt durchsetzt.

Alternativ oder ergänzend dazu ist vorgesehen, dass die Strebenstruktur mindestens einen Freiraum aufweist, welcher sich quer zu der Mittelfläche erstreckt, jedoch durch eine sich zwischen den Längsstreben erstreckende und ein Verbindungselement bildende Verbindungswand der Strebenstruktur abgeschlossen ist.

Bei einer derartigen Ausbildung des Ankuppelarms können der Krafterfassungsbereich und die entsprechende Einwirkungsfläche an unterschiedlichen Stellen der Tragstruktur angeordnet sein.

So sieht eine vorteilhafte Lösung vor, dass der Krafterfassungsbereich und die Einwirkungsfläche an einer der Längsstreben angeordnet sind.

Die Längsstreben sind bei der Belastung des Ankoppelarms primär Zug-, Schub- und Biegekräften ausgesetzt, so dass sich an den Längsstreben vorteilhafterweise vertikale Belastungen und Belastungen in Fahrtrichtung, gegebenenfalls aber auch Belastungen quer zur Fahrtrichtung erfassen lassen.

Eine andere Lösung sieht vor, dass der Krafterfassungsbereich und die Einwirkungsfläche an einem Verbindungselement angeordnet sind.

In einem derartigen Fall lassen sich insbesondere vertikale Belastungen und gegebenenfalls auch Belastungen in Fahrtrichtung und eventuell auch noch quer zur Fahrtrichtung erfassen.

Besonders günstig ist es, wenn die Einwirkungsfläche an einer Außenseite der Tragstruktur angeordnet ist, da in diesem Fall in einfacher Weise der der Einwirkungsfläche zugeordnete Sensor montiert werden kann.

Allerdings sieht eine andere vorteilhafte Lösung vor, dass die Einwirkungsfläche an einer dem Freiraum zugewandten Seite der Tragstruktur angeordnet ist.

Eine derartige Lösung hat den großen Vorteil, dass sich damit der der Einwirkungsfläche zugeordnete Sensor in dem Freiraum der Tragstruktur anordnen lässt.

Ferner wurde im Zusammenhang mit der bisherigen Erläuterung der einzelnen Ausführungsbeispiele nicht näher darauf eingegangen, an welcher Stelle in Längsrichtung des Ankoppelarms der Krafterfassungsbereich und die Einwirkungsfläche vorgesehen sein sollen.

So sieht eine besonders vorteilhafte Lösung vor, dass der Krafterfassungsbereich und die Einwirkungsfläche am ersten Endbereich des Ankuppelarms angeordnet sind.

Diese Lösung hat den Vorteil, dass im ersten Endbereich die zu erfassenden Belastungen sehr groß sind und dabei einfach erfasst werden können.

Eine andere vorteilhafte Lösung sieht vor, dass der Krafterfassungsbereich und die Einwirkungsfläche zwischen dem ersten und dem zweiten Endbereich angeordnet sind.

Diese Lösungen haben den Vorteil, dass sich in diesem Fall dann die der Einwirkungsfläche zugeordneten Sensoren räumlich günstig und auch einfach zugänglich anordnen lassen.

Eine weitere vorteilhafte Lösung sieht vor, dass der mindestens eine Erfassungsbereich an der Trägereinheit angeordnet ist.

Auch die Trägereinheit unterliegt den mechanischen Belastungen bei einem angekuppelten Anhänger oder einem angeordneten Hecklastenträger, so dass sich auch an der Trägereinheit mechanische Belastungen durch einen Sensor mittels des magnetoelastischen Effekts erfassen lassen.

Beispielsweise ist hierzu vorgesehen, dass an einem Querträger der Trägereinheit mindestens ein Erfassungsbereich vorgesehen ist.

Ein derartiger Querträger der Trägereinheit, welcher sich quer zu der Längsmittelebene erstreckt, erfährt vorzugsweise Zug- und Schubbelastungen aber auch Torsionsbelastungen, die sich in einfacher Weise an dem Querträger erfassen lassen, da dieser aufgrund seiner Ausdehnung quer zur Längsmittelebene ausreichende räumliche Möglichkeiten zur Erfassung der Belastungen und Anordnung der Einwirkungsflächen zur Verfügung stellt.

Im Zusammenhang mit der bisherigen Erläuterung der erfindungsgemäßen Lösung wurde zwar das Vorsehen mindestens eines Krafterfassungsbereichs vorgegeben.

Besonders vorteilhaft ist es jedoch, wenn mehrere Krafterfassungsbereiche an einem oder mehreren belasteten Abschnitten oder verteilt auf mehrere belastete Abschnitte vorgesehen sind, da sich durch mehrere Sensoren und mehrere Krafterfassungsbereiche die Erfassung der Belastungen verbessern lässt.

Besonders günstig ist es dabei, wenn in verschiedenen Krafterfassungsbereichen die Belastungen mittels des magnetoelastischen Effekts mit einem Schwerpunkt auf unterschiedliche Erfassungsrichtungen erfasst werden.

Hierbei ist beispielsweise vorgesehen, dass unterschiedliche Erfassungsbereiche schwerpunktmäßig Belastungen in unterschiedlichen Erfassungsrichtungen erfahren und somit die diesen Erfassungsbereichen zugeordneten Sensoren dann schwerpunktmäßig auch die Belastungen in diesen Erfassungsrichtungen erfassen können.

Außerdem lassen sich auch durch die Anordnung und Ausrichtung der Sensoren bevorzugte Erfassungsrichtungen für die Belastungen vorgeben.

Somit kann insbesondere durch geeignete Auswahl der Erfassungsbereiche je nach den in diesen schwerpunktmäßig auftretenden Belastungen und ergänzend durch geeignete Anordnung und Ausrichtung der Sensoren in diesen Erfassungsbereichen die Erfassungsrichtungen festlegen, in denen schwerpunktmäßig Belastungen durch den magnetoelastischen Effekt mittels den Sensoren erfasst werden können.

Hinsichtlich der Ausbildung der Sensoren wurden bislang keine näheren Angaben gemacht.

So sieht eine vorteilhafte Lösung vor, dass der jeweilige Sensor Magnetpole mit der Erfassungsfläche zugewandten Kopfflächen aufweist.

Insbesondere sind dabei die Kopfflächen im Abstand von der Einwirkungsfläche angeordnet.

Wobei eine definierte Anordnung der Kopffläche relativ zur Einwirkungsfläche erforderlich ist.

Aus diesem Grund ist vorzugsweise vorgesehen, dass zwischen der Einwirkungsfläche und der jeweiligen Kopffläche ein Spalt aus nicht magnetischem Material vorgesehen ist.

Der Spalt könnte beispielsweise ein Luftspalt sein.

Eine besonders vorteilhafte Lösung sieht vor, dass der Spalt durch eine nicht magnetische Materialschicht gebildet ist.

Eine besonders günstige Lösung sieht vor, dass der Spalt durch eine Kunststoffschicht gebildet ist.

Hinsichtlich der Montage des Sensors sind die unterschiedlichsten Lösungen denkbar, um den Sensor relativ zu der jeweiligen Einwirkungsfläche definiert zu fixieren.

Beispielsweise wäre es denkbar, den Sensor durch eine Fügeverbindung mit der Einwirkungsfläche zu verbinden, beispielsweise durch eine Fügeverbindung zwischen dem Sensor und der Kunststoffschicht sowie der Kunststoffschicht und der Einwirkungsfläche.

Eine besonders vorteilhafte Lösung sieht vor, dass der Sensor relativ zu der jeweiligen Einwirkungsfläche mittels einer auf den Sensor wirkenden Haltevorrichtung fixiert ist.

Besonders günstig ist es dabei, wenn die Haltevorrichtung den Sensor in Richtung der Einwirkungsfläche mit einer Kraft beaufschlagt, so dass der Sensor permanent mit einer Kraft in Richtung der Einwirkungsfläche beaufschlagt ist.

Zur Erfassung des magnetoelastischen Effekts ist vorzugsweise vorgesehen, dass die Detektionsschicht durch ferromagnetisches Material gebildet ist.

Besonders günstig ist es, wenn die Detektionsschicht Chromstahl umfasst.

Prinzipiell wäre es denkbar, dass die Detektionsschicht durch eine auf dem Krafterfassungsbereich aufgebrachte und mit diesem flächig verbundene ferromagnetische Schicht gebildet ist, die dieselben Belastungen erfährt, wie der Krafterfassungsbereich selbst.

Besonders günstig ist es, wenn die Detektionsschicht durch das Material des Krafterfassungsbereichs im jeweiligen Abschnitt der Kupplungseinheit, also insbesondere durch das Material des Ankuppelarms oder das Material der Trägereinheit selbst gebildet ist.

Vorzugsweise ist hierbei vorgesehen, dass der Krafterfassungsbereich ein Bereich der Kupplungseinheit ist, welcher Belastungen erfährt, die mindestens 50 % der maximalen Belastung der Kupplungseinheit betragen, um möglichst zuverlässige Messergebnisse zu erhalten.

Hinsichtlich des Sensors selbst wurden im Zusammenhang mit der bisherigen Erläuterung der erfindungsgemäßen Lösung keine näheren Angaben gemacht.

So ist bei einem Sensor für die Erfassung des magnetoelastischen Effekts vorgesehen, dass dieser eine Erregerspule und mindestens eine Messspule, vorzugsweise mehrere Messspulen aufweist.

Ferner ist bei einem derartigen Sensor vorgesehen, dass die Erregerspule durch eine Erregersteuerung angesteuert ist, welche die Erregerspule mit einer oder mehreren Frequenzen betreibt.

Ferner ist vorzugsweise vorgesehen, dass in dem Sensor eine die in der mindestens einen Messspule empfangenen Signale verarbeitende Signalauswerteeinheit angeordnet ist, die ein Signal erzeugt, welches ein Maß für die Belastung des Krafterfassungsbereichs im belasteten Zustand relativ zum unbelastenden Zustand darstellt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine rückwärtige Ansicht eines Kraftfahrzeugs mit einer erfindungsgemäßen Kupplungseinheit;
- Fig. 2: eine vergrößerte Darstellung einer erfindungsgemäßen Kupplungseinheit mit einer Trägereinheit und einer Lagereinheit sowie einem Ankuppelarm;
- Fig. 3: eine perspektivische Darstellung eines ersten Ausführungsbeispiels eines erfindungsgemäßen Ankuppelarms mit einer Strebenstruktur als Tragstruktur;
- Fig. 4: eine Schnittdarstellung in Abwicklung längs Linie 4-4 in Fig. 3;
- Fig. 5: einen Vertikalschnitt längs Linie 5-5 in Fig. 4;
- Fig. 6: eine ausschnittsweise vergrößerte Darstellung des Schnitts gemäß Fig. 4;
- Fig. 7: eine ausschnittsweise vergrößerte Darstellung des Schnitts gemäß Fig. 5;
- Fig. 8: eine vergrößerte Darstellung einer Anordnung eines erfindungsgemäßen Sensors auf einer Einwirkungsfläche eines Krafterfassungsbereichs;
- Fig. 9: einen Schnitt ähnlich Fig. 7 eines zweiten Ausführungsbeispiels eines erfindungsgemäßen Ankuppelarms;
- Fig. 10: einen Schnitt ähnlich Fig. 9 eines dritten Ausführungsbeispiels eines erfindungsgemäßen Ankuppelarms;
- Fig. 11: einen Schnitt ähnlich Fig. 6 durch ein viertes Ausführungsbeispiel eines erfindungsgemäßen Ankuppelarms;
- Fig. 12: eine perspektivische Darstellung eines Ankuppelarms gemäß einem der ersten vier Ausführungsbeispiele, versehen mit Abdeckungen;
- Fig. 13: eine perspektivische Darstellung eines fünften Ausführungsbeispiels eines erfindungsgemäßen Ankuppelarms mit Darstellung der Krafterfassungsbereiche und der entsprechenden Einwirkungsflächen;
- Fig. 14: einen Schnitt längs Linie 14-14 in Fig. 13;
- Fig. 15: eine perspektivische Darstellung ähnlich Fig. 13 eines sechsten Ausführungsbeispiels eines erfindungsgemäßen Ankuppelarms und
- Fig. 16: eine perspektivische Darstellung eines siebten Ausführungsbeispiels einer erfindungsgemäßen Kupplungseinheit.

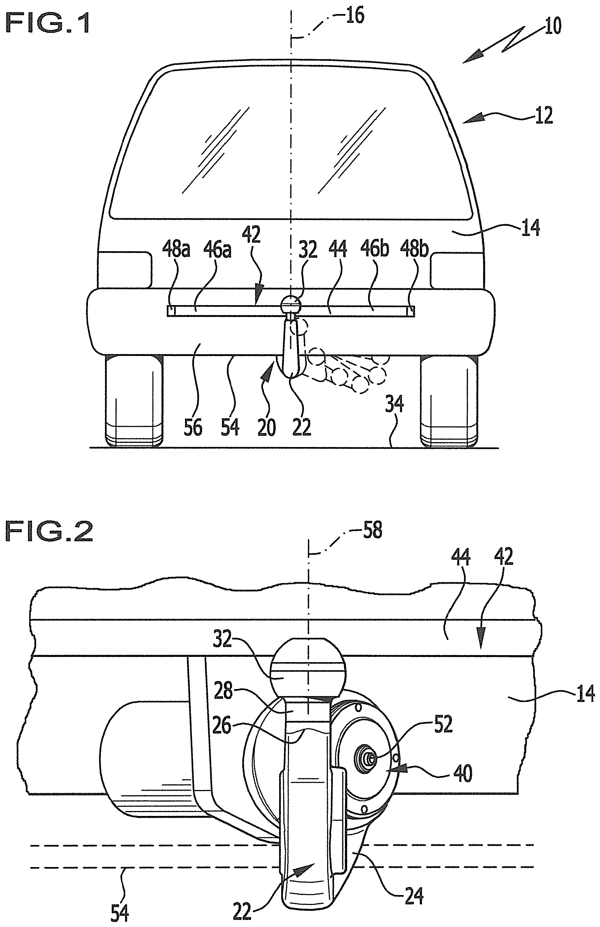

Ein in Fig. 1 dargestelltes und als Ganzes mit 10 bezeichnetes Kraftfahrzeug umfasst eine Karosserie 12, die an einem Heckbereich 14 eine Kupplungseinheit 20 beispielsweise eine Anhängekupplung, trägt, welche wie in Fig. 1 und 2 dargestellt, einen Ankuppelarm 22, beispielsweise einen Kugelhals, aufweist, der sich von einem fahrzeugzugewandten ersten Endbereich 24 zu einem fahrzeugabgewandten zweiten Endbereich 26 erstreckt, wobei an dem zweiten Endbereich 26 ein Kuppelelement 32 angeordnet ist, beispielsweise ein Kugelansatz 28, auf welchem eine Kupplungskugel 32 sitzt, die somit über den Kugelansatz 28 mit dem zweiten Endbereich 26 des Ankuppelarms 22 verbunden ist.

Der erste Endbereich 24 des Kugelhalses 22 ist über eine als Ganzes mit 40 bezeichnete Lagereinheit mit einem fahrzeugseitigen Trägereinheit 42 verbunden, über welchen eine Verbindung mit dem Heckbereich 14 der Karosserie 12 erfolgt.

Beispielsweise umfasst die Trägereinheit 42 einen Querträger 44, der sich quer zu einer zu einer horizontalen Fahrbahn 34 vertikalen Längsmittelebene 16 der Karosserie 12 und der Kupplungseinheit 20 erstreckt und im Bereich seiner Trägerenden 46a, 46b mit dem Heckbereich 14 verbunden ist, beispielsweise über beiderseits der Längsmittelebene 16 und parallel zu dieser verlaufende Seitenträger 48a, 48b die einerseits mit den Trägerenden 46a, 46b und andererseits mit der Karosserie 12, insbesondere dem Heckbereich 14 derselben, verbunden sind.

Beispielsweise ist die Lagereinheit 40 im einfachsten Fall so ausgebildet, dass sie eine starre Verbindung zwischen dem ersten Endbereich 24 des Kugelhalses 22 und der Trägereinheit 42 herstellt.

Im in Fig. 1 und 2 dargestellten Ausführungsbeispiel ermöglicht die Lagereinheit 40 ein Schwenken des Ankuppelarms 22 um eine fahrzeugfest angeordnete, jedoch relativ zu der vertikalen Längsmittelebene 16 schräg, insbesondere in einem spitzen Winkel, verlaufende Schwenkachse 52, so dass wie in Fig. 1 dargestellt, der Ankuppelarm 22 unter einer Unterkante 54 einer heckseitigen Stoßfängereinheit 56 der Karosserie 12 hindurch bewegbar ist und in einem Zwischenraum zwischen der Stoßfängereinheit 56 und dem Heckbereich 14 der Karosserie 12 in einer Ruhestellung positionierbar ist, während in der in Fig. 1 dargestellten Arbeitsstellung sich der Ankuppelarm 22 im Wesentlichen in parallel zur vertikalen Längsmittelebene 16 erstreckt, zumindest jedoch so verläuft, dass in der Arbeitsstellung eine vertikale Mittelachse 58 der Kupplungskugel 32 gleichzeitig eine Mittelachse des Kugelansatzes 28 darstellt und diese Mittelachse 58 in der Längsmittelebene 16 der Karosserie 12 liegt.

Derartige Lagereinheiten 40 mitsamt den dazugehörigen Verriegelungsvorrichtungen sind beispielsweise in den europäischen Patentanmeldungen EP 1 142 732 A, EP 1 741 572 A, EP 1 886 847 A, EP 2 141 034 A, EP 2 261 066 A, EP 2 567 837 A im Detail beschrieben, und auf diese Patentanmeldungen wird vollinhaltlich Bezug genommen.

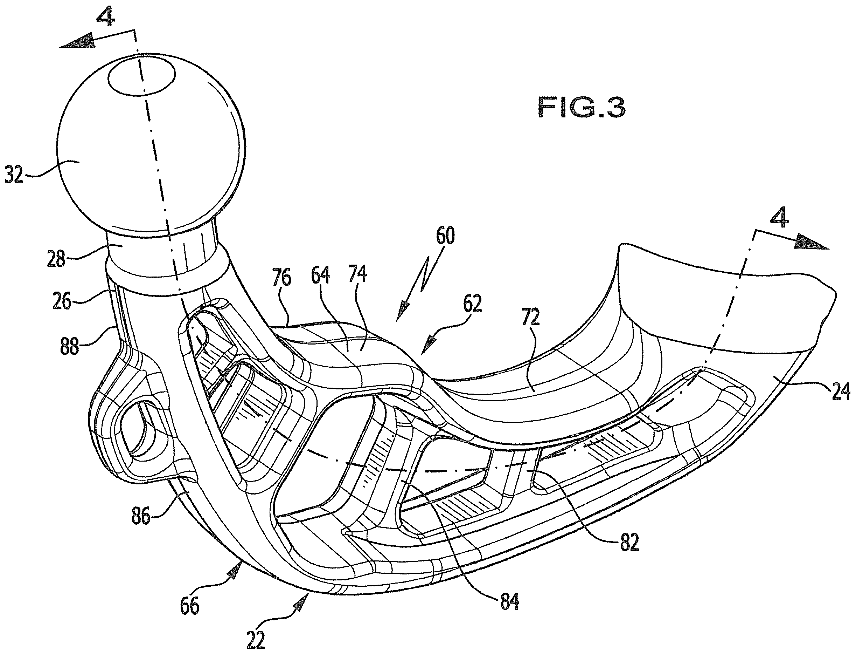

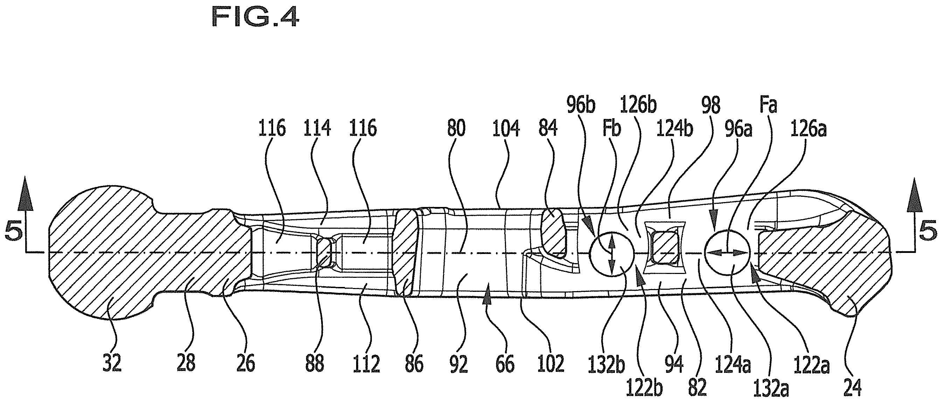

Wie in Fig. 3 und Fig. 4 dargestellt, umfasst der Ankuppelarm 22 eine vom ersten Endbereich 24 zum zweiten Endbereich 26 verlaufende Tragstruktur 60, die den ersten Endbereich 24 mit dem zweiten Endbereich 26 im Wesentlichen biege- und torsionssteif miteinander verbindet, wobei unter einer im Wesentlichen biege- und torsionssteifen Verbindung eine Verbindung zu verstehen ist, die bei in der Arbeitsstellung stehendem Ankuppelarm 22 bei den nachfolgend dargestellten Belastungen die folgenden Steifigkeitswerte aufweist.

Die Steifigkeit der Tragstruktur lässt sich beispielsweise bestimmen bei einer Belastung von 100 KN in der jeweiligen Raumrichtung sich die Kupplungskugel 32 relativ zum ersten Endbereich um maximal 5 mm bewegt.

Bei dem in Fig. 3 und 4 dargestellten Ausführungsbeispiel der Ankuppeleinheit 22 ist die Tragstruktur 60 als Strebenstruktur 62 ausgebildet, welche bezogen auf die Arbeitsstellung der Ankuppeleinheit 22 eine erste Längsstrebe 64 und eine zweite Längsstrebe 66 aufweist, wobei die erste Längsstrebe in der Arbeitsstellung auf einer der Fahrbahn 34 abgewandten Seite und die zweite Längsstrebe der Fahrbahn 34 zugewandt angeordnet ist.

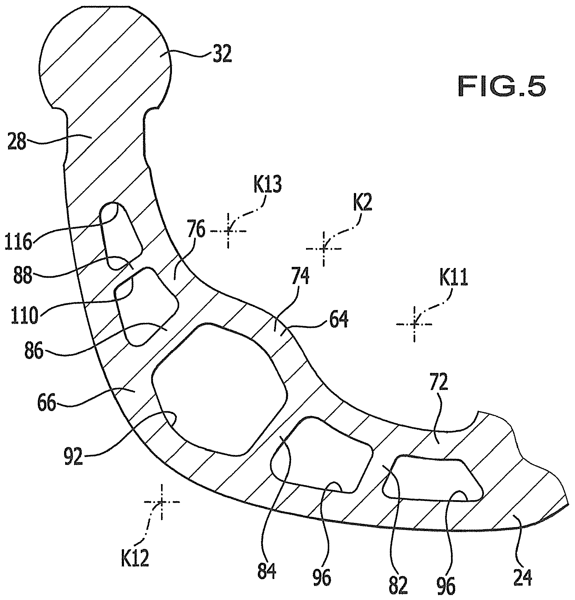

Dabei verläuft die erste Längsstrebe 64 vom insbesondere massiv ausgebildeten ersten Endbereich 24 zum insbesondere massiv ausgebildeten zweiten Endbereich 26 und die zweite Längsstrebe 66 ebenfalls vom ersten Endbereich 24 zum zweiten Endbereich 26, allerdings im Abstand von der ersten Längsstrebe 64 wobei die zweite Längsstrebe 66 in der Arbeitsstellung der Ankuppeleinheit 22 beispielsweise eine Krümmung aufweist, bei welcher ein Krümmungsmittelpunkt K2 oder gegebenenfalls mehrere Krümmungsmittelpunkte auf einer der Fahrbahn 34 abgewandten Seite liegen (Fig. 5).

Auch die erste Längsstrebe 64 verläuft bei diesem, in Fig. 3 dargestellten Ausführungsbeispiel mit einem ersten Teilbereich 72 ausgehend vom ersten Endbereich 24 mit insgesamt drei aufeinanderfolgenden Teilbereichen 72, 74, 76 bis zum zweiten Endbereich 26, wobei die Teilbereiche 72 und 76 Krümmungen aufweisen, deren Krümmungsmittelpunkte K11 und K13 auf einer der Fahrbahn 34 abgewandten Seite derselben liegen, während der Teilbereich 74 eine Krümmung aufweist, dessen Krümmungsmittelpunkt K12 oder Krümmungsmittelpunkte auf einer der Fahrbahn 34 zugewandten Seite des Teilbereichs 74 liegen (Fig. 5).

Ferner verlaufen, wie insbesondere in Fig. 4 im Zusammenhang mit der zweiten Längsstrebe 66 dargestellt, beide Längsstreben 64, 66 in einer Mittelfläche 80 und erstrecken sich quer zur Mittelfläche 80 in allen Bereichen beiderseits über diese hinaus, so dass insbesondere beide Längsstreben 64, 66 quer zur Mittelfläche 80 eine Breitenausdehnung von mindestens 15 mm, noch besser mindestens 20 mm aufweisen.

Ferner weisen die Längsstreben 64, 66 in der Mittelfläche 80 eine quer zu ihrer Verlaufsrichtung verlaufende Höhenausdehnung, insbesondere von mindestens 5 mm, auf.

Bei dem in Fig. 1 bis 4 dargestellten ersten Ausführungsbeispiel verlaufen die Längsstreben 64 und 66 im Bereich zwischen dem ersten Endbereich 24 und dem zweiten Endbereich 26 berührungsfrei zueinander, sind allerdings durch in Fig. 3 dargestellte Verbindungsstreben 82, 84, 86, 88 miteinander verbunden, wobei die Verbindungsstreben 82, 84, 86, 88, wie in Fig. 4 dargestellt, sich beispielsweise ebenfalls quer zur Mittelfläche 80 ausdehnen und jeweils die Längsstreben 64 und 66 miteinander starr verbinden.

Die Verbindungsstreben 82, 84, 86, 88 sind vorzugsweise alle so angeordnet, dass die Mittelfläche 80 diese schneidet und verlaufen außerdem in Richtung vom ersten Endbereich 24 zum zweiten Endbereich 26 im Abstand voneinander.

Durch die Strebenstruktur 62 der Tragstruktur 60 entstehen beispielsweise mehrere, insbesondere zwischen den Längsstreben 64 und 66, angeordnete Freiräume.

So ist beispielsweise ein erster Freiraum 92 so ausgebildet, dass er einen die gesamte Strebenstruktur 62, ausgehend von einer seitlichen Außenkontur 102 des Kugelhalses zur gegenüberliegenden seitlichen Außenkontur 104 durchsetzt und somit einen Durchlass in der Strebenstruktur 62 darstellt.

Ein weiterer Freiraum 94 ist beispielsweise als relativ zu der seitlichen Außenkontur 102 des Kugelhalses 22 zurückgesetzte Tasche ausgebildet und geht in zwei jeweils als Durchlässe ausgebildete Freiräume 96 über, die wiederum in einen als relativ zu der seitlichen Außenkontur 104 des Kugelhalses zurückgesetzte Tasche ausgebildeten Freiraum 98 münden.

Vorzugsweise liegt der als Durchlass ausgebildete Freiraum 92 zwischen den Verbindungsstreben 84 und 86 und die als Durchlässe ausgebildeten Freiräume 96 liegen zwischen dem ersten Endbereich 24 und der Verbindungsstrebe 82 sowie der Verbindungsstrebe 82 und der Verbindungsstrebe 84 und außerdem liegen die als Taschen ausgebildeten Freiräume 94 und 98 zwischen dem ersten Endbereich 24 und der Verbindungsstrebe 84.

Des Weiteren sind auch zwischen der Verbindungsstrebe 86 und dem zweiten Endbereich 26 als einander gegenüberliegende Taschen ausgebildete Freiräume 112 und 114 vorgesehen, wobei der Freiraum 112 relativ zu der seitlichen Außenkontur 102 des Kugelhalses 22 und der Freiraum 114 relativ zu der seitlichen Außenkontur 104 zurückgesetzt ist und zwischen diesen Freiräumen 112 und 114 liegen wiederum als Durchlässe ausgebildete Freiräume 116, wobei der eine als Durchlass ausgebildete Freiraum 116 zwischen der Verbindungsstrebe 86 und der Verbindungsstrebe 88 und der andere als Durchlass ausgebildete Freiraum 116 zwischen der Verbindungsstrebe 88 und dem zweiten Endbereich 26 liegt.

Die erfindungsgemäße Strebenstruktur 62 mit den Freiräumen 92 bis 98 sowie 112 bis 116 hat den Vorteil, dass sich damit die Masse des Kugelhalses 22 bei gleicher Steifigkeit signifikant gegenüber massiven Kugelhälsen, selbst wenn diese einen Durchbruch aufweisen, reduzieren lässt.

Zur Erfassung der Belastungen des Ankuppelarms 22 sind beispielsweise im Bereich der als Durchlässe ausgebildeten Freiräume 96a und 96b, insbesondere auf einer den Freiräumen 96 zugewandten Innenseite der zweiten Längsstrebe 66 Krafterfassungsbereiche 122a und 122b vorgesehen, denen Sensoren 132a und 132b zugeordnet sind, die die in den Krafterfassungsbereichen 122a und 122b durch die Belastung des Kugelhalses 22 wirkenden Kräfte mittels des magnetoelastischen Effekts erfassen.

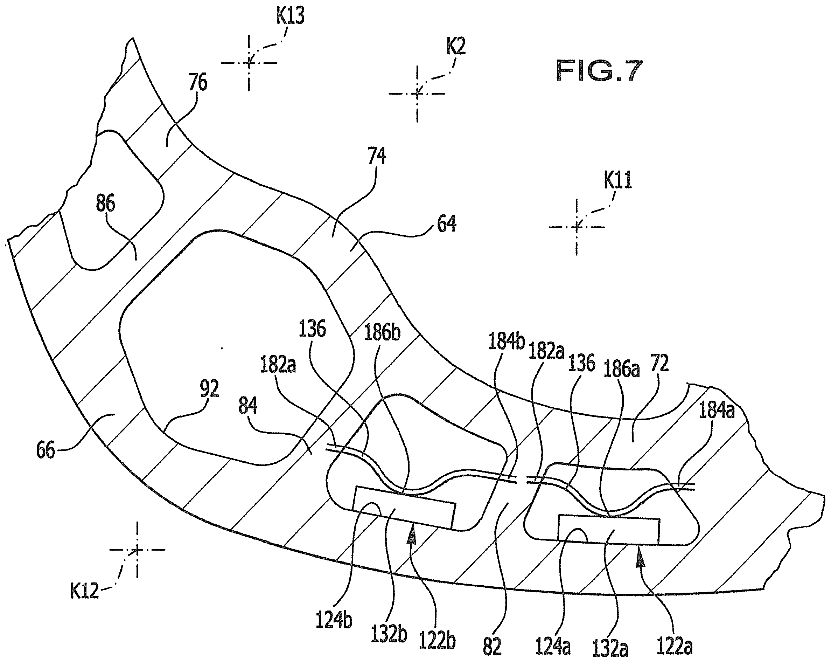

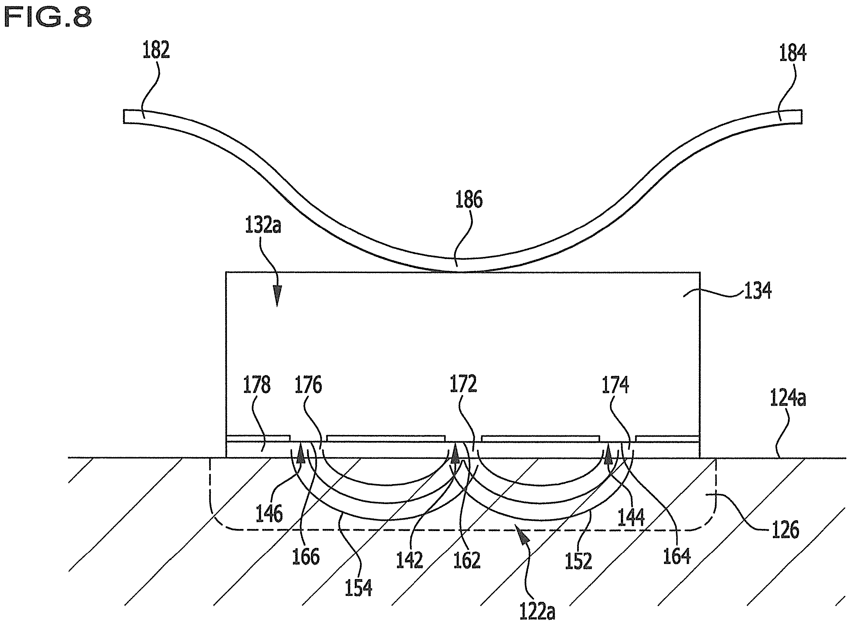

Hierzu sind die Sensoren 132a und 132b über im Inneren der Strebenstruktur 62 auf den Freiräumen 96a, 96b zugewandten Seiten der Längsstrebe 66 liegende Einwirkungsflächen 124a und 124b der Krafterfassungsbereiche 122a, 122b angeordnet (Fig. 7) wobei jeder der Sensoren 132a, 132b beispielsweise mehrere Magnetpole 142, 144 und 146 (Fig. 8), aufweist, über welche eine Einkopplung von jeweils zwischen den Magnetpolen verlaufenden Magnetfeldern 100, beispielsweise dem Magnetfeld 152 zwischen den Magnetpolen 142 und 144 und dem Magnetfeld 154 zwischen den Magnetpolen 142 und 146 in den jeweiligen Krafterfassungsbereich, im in Fig. 8 dargestellten Fall den Krafterfassungsbereich 122a der zweiten Längsstrebe 66, erfolgt, wobei mittels der Magnetfelder 152 und 154 die durch die mechanischen Kräfte beeinflusste magnetische Permeabilität des Materials in dem Krafterfassungsbereich erfasst wird.

Insbesondere dringen die Magnetfelder 152 und 154 allerdings lediglich in eine Detektionsschicht 126 des Einwirkungsbereichs 122 nur über eine geringe Tiefe in den Krafterfassungsbereich eindringt.

Der Sensor 132 ist somit in der Lage über die Magnetfelder 152 und 154 in der Detektionsschicht 126 wirkende Zug- und/oder Schubkräfte mittels des magnetoelastischen Effekts zu erfassen.

Beispiele für derartige Sensoren 132 sind in der DE 10 2016 122 172 A1, der DE 30 31 997 A und der EP 0 136 086 beschrieben, auf welche hiermit Bezug genommen wird.

Vorzugsweise sind dabei Kopfflächen 162, 164, 166 der Magnetpole 142, 144, 146 im Abstand von der Einwirkungsfläche 124 angeordnet, so dass zwischen der Einwirkungsfläche 124 und der jeweiligen Kopffläche 162, 164, 166 ein Spalt 172, 174, 176 aus nicht magnetischem Material besteht, wobei der Spalt 172, 174, 176 ein Luftspalt sein kann, vorzugsweise aber durch eine zwischen den Kopfflächen 162, 164, 166 und der Einwirkungsfläche 124 liegende Kunststoffschicht 178 ist, um eine definierte Lage der Kopfflächen 162, 164 und 166 relativ zur Einwirkungsfläche 124 dauerhaft aufrechtzuerhalten.

Vorzugsweise ist dabei der gesamte Sensor 132, insbesondere ein Sensorgehäuse 134 des Sensors in Richtung der Einwirkungsfläche 124 kraftbeaufschlagt, so dass die Kunststoffschicht 178 zwischen den Kopfflächen 162, 164 und 166 sowie der Einwirkungsfläche 124 eingespannt ist.

Die Kraftbeaufschlagung des Sensors 132 erfolgt beispielsweise jeweils durch ein federelastisches Element 136, beispielsweise ausgebildet als Bügelfeder, deren Enden im Ankuppelarm 22 seitlich der Einwirkungsflächen 124 verankert sind und die mit einer Bügelkuppe 186 auf das Sensorgehäuse 134 auf der der Einwirkungsfläche 124 abgewandten Seite einwirkt um dieses in Richtung der Einwirkungsfläche 124a mit Kraft zu beaufschlagen.

Um optimale Änderungen der magnetischen Permeabilität in der Detektionsschicht 126 zu erreichen, ist vorzugsweise der jeweilige Krafterfassungsbereich 122 und somit insbesondere die gesamte Strebenstruktur 62 aus einem ferromagnetischem Material, vorzugsweise Chromstahl, gebildet.

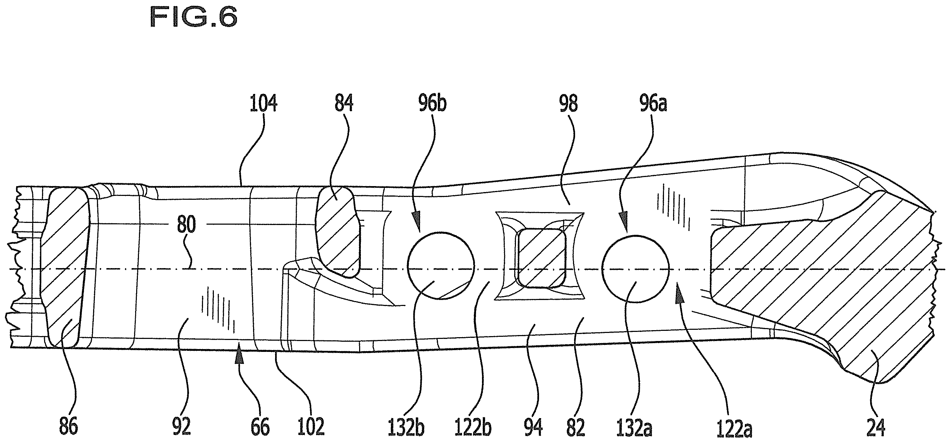

Bei dem in den Fig. 1 bis 8 dargestellten ersten Ausführungsbeispiel sind beispielsweise zwei Sensoren 132, nämlich die Sensoren 132a und 132b, vorgesehen, die so angeordnet sind, dass sie vorzugsweise unterschiedliche Raumrichtungen bevorzugt erfassen.

Beispielsweise ist vorgesehen, dass der Sensor 132a bevorzugt in der von ihm erfassten Detektionsschicht 126a Zug- oder Schubkräfte Fa erfasst, die parallel zur Mittelfläche 80 verlaufen, während der Sensor 132b bevorzugt Zug- oder Schubkräfte Fb erfasst, die quer zur Mittelfläche 80 gerichtet sind.

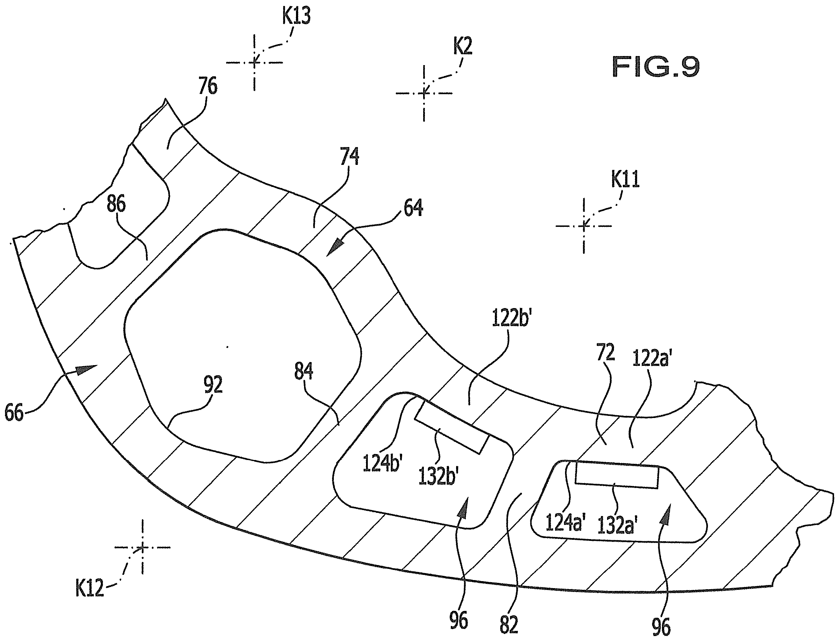

Im Gegensatz zum ersten Ausführungsbeispiel ist bei einem zweiten Ausführungsbeispiel, dargestellt in Fig. 9 vorgesehen, dass mit Sensoren 132a' und 132b' Krafterfassungsbereiche 122a' und 122b' in der ersten Längsstrebe 66 erfasst werden, wobei beispielsweise die Sensoren 132a' und 132b' ebenfalls in den Freiräumen 96 angeordnet sind.

Im Übrigen ist bei dem zweiten Ausführungsbeispiel die Funktionsweise der Sensoren und die Erfassung der Kräfte mittels des magnetoelastischen Effekts dieselbe wie bei dem ersten Ausführungsbeispiel, so dass auf die Funktionsbeschreibung und die Beschreibung der Anordnung der Sensoren im Detail relativ zum Krafteinwirkungsbereich 122 im Zusammenhang mit dem ersten Ausführungsbeispiel vollinhaltlich Bezug genommen werden kann.

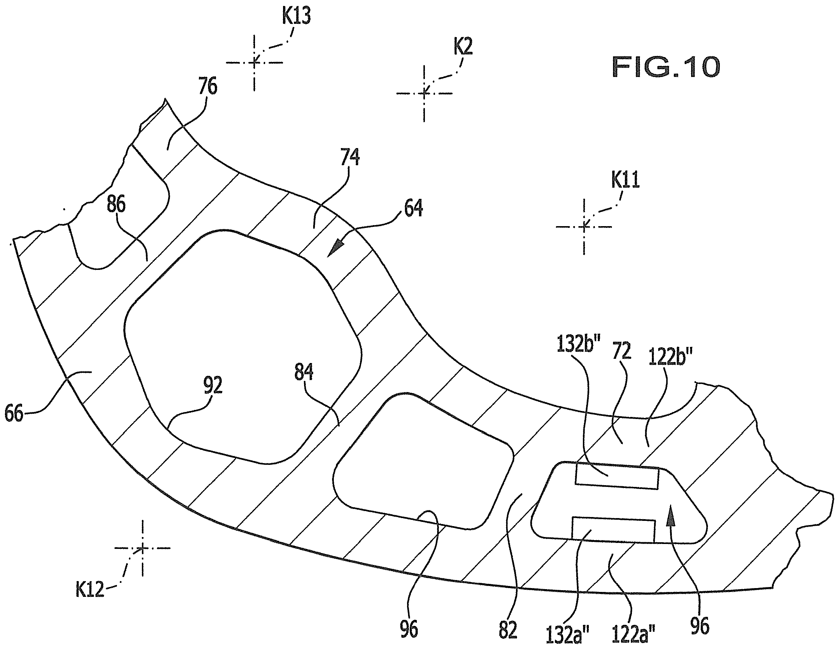

Bei einem dritten Ausführungsbeispiel, dargestellt in Fig. 10, ist beispielsweise der Sensor 132a" in einem dem ersten Endbereich 24 des Kugelhalses nächstliegenden Freiraum 96 angeordnet und erfasst mittels des magnetoelastischen Effekts die Kräfte in dem Krafterfassungsbereich 122a" der zweiten Längsstrebe 66, während der Sensor 132b" ebenfalls in demselben Freiraum 126 nahe des ersten Endbereichs 24 angeordnet ist und in dem Krafterfassungsbereich 122b" die Kräfte mittels des magnetoelastischen Effekts erfasst.

Im Übrigen ist bei dem dritten Ausführungsbeispiel die Funktionsweise der Sensoren 132 dieselbe wie bei den voranstehenden Ausführungsbeispielen, so dass im Zusammenhang mit der detaillierten Beschreibung der Funktionsweise und der Anordnung der Sensoren 132 relativ zum jeweiligen Krafterfassungsbereich 122 vollinhaltlich auf die Ausführungen im Zusammenhang mit den voranstehenden Ausführungsbeispielen Bezug genommen werden kann.

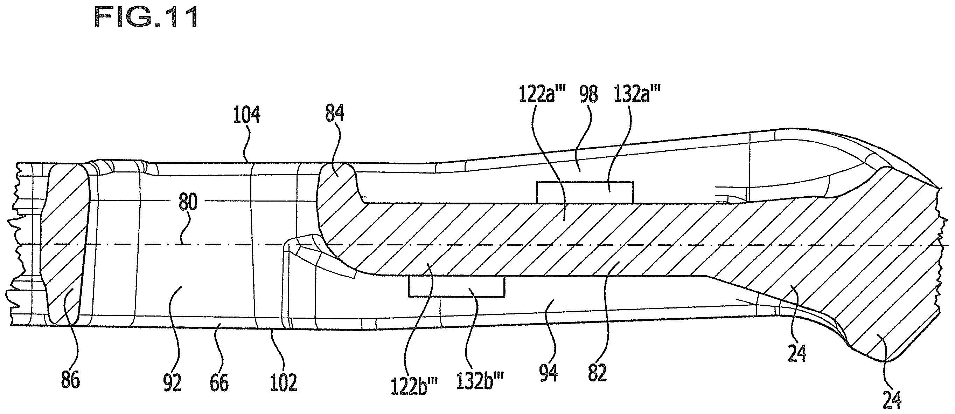

Bei einem vierten Ausführungsbeispiel, dargestellt in Fig. 11 ist die Strebenstruktur insoweit modifiziert, als zwischen den Freiräumen 94 und 98 die Verbindungsstrebe 82 sich von dem ersten Endbereich 24 als parallel zur Mittelfläche 80 verlaufende Wand bis zur Verbindungsstrebe 84 erstreckt und in diese übergeht, so dass die Verbindungsstrebe 82 die Freiräumen 94 und 98 vollständig voneinander trennt.

Bei diesem Ausführungsbeispiel erstreckt sich auch die Verbindungsstrebe 82 zwischen den ersten und zweiten Längsstreben 64 und 66 und bildet somit eine zwischen diesen durchgehende Wand.

In bei diesem vierten Ausführungsbeispiel sind beispielsweise auf gegenüberliegenden Seiten der Verbindungsstrebe 82 Sensoren 132a‴ und 132b‴ vorgesehen, die in von der Verbindungsstrebe 82 gebildeten Erfassungsbereichen 122a‴ und 122b‴ mittels des magnetoelastischen Effekts die in diesen auftretenden Kräfte erfassen.

Dabei kann beim vierten Ausführungsbeispiel hinsichtlich der Zuordnung der Sensoren 132a‴ und 132b‴ zu den jeweiligen Erfassungsbereichen und der Funktionsweise ebenfalls vollinhaltlich auf die Ausführungen zu den voranstehenden Ausführungsbeispielen, insbesondere dem ersten Ausführungsbeispiel, Bezug genommen werden.

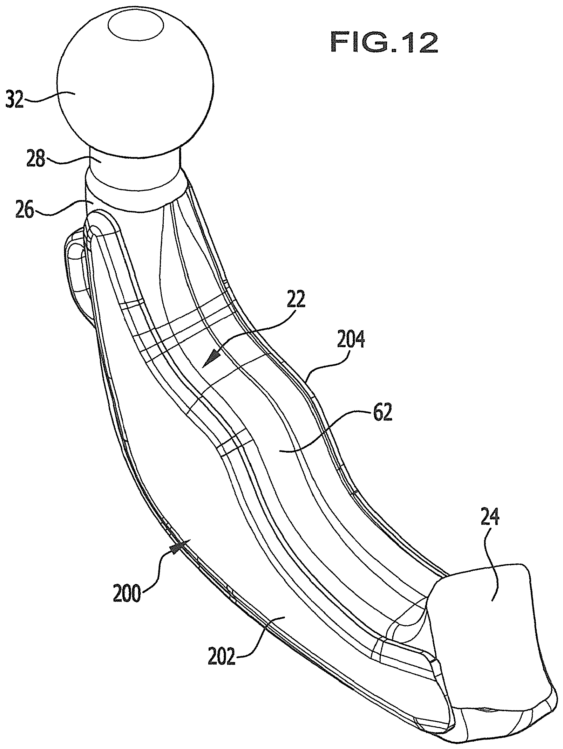

Um beim Einsatz eines der vorstehend beschriebenen Ankuppelarms 22 die Freiräume 92 bis 98 sowie 112 bis 116 nicht sichtbar werden zu lassen, ist bei einem Ausführungsbeispiel eine für die Strebenstruktur 62 nicht tragende Verkleidung 200 vorgesehen, die beispielsweise, wie in Fig. 12 dargestellt, struktursteife Abdeckungen 202, 204 umfasst, welche den Ankuppelarm 22 im Bereich seiner seitlichen Außenkonturen 102 und 104 verschließen, wobei die Abdeckungen 202, 204 beispielsweise sämtliche der über die Außenkonturen 102 und 104 sichtbaren und zugänglichen Freiräume 92, 94, 96, 98, 112, 114, 116 überdecken und, wie in Fig. 12 dargestellt, dem in Form der Strebenstruktur 62 hergestellten Kugelhals 22 durch Überdecken der Freiräume 92 bis 98 sowie 112 bis 116 ein gefälliges äußeres Erscheinungsbild verleihen, so dass die Strebenstruktur 62 als solche nicht erkennbar ist und der Kugelhals 22 mit der Strebenstruktur 62 ein kompaktes Aussehen besitzt.

Die Abdeckungen 202, 204 lassen sich vorzugsweise als Kunststoffformteile, insbesondere als nicht tragende Kunststoffformteile, in einfacher Weise mit dem gewünschten entsprechenden optischen Erscheinungsbild herstellen, so dass dadurch beispielsweise die Möglichkeit besteht, die Strebenstruktur 62 insbesondere im Bereich der Freiräume 92 bis 98 sowie 112 bis 116 im durch das Herstellverfahren, beispielsweise das Umformen, entstandenen Rohzustand und unbearbeitet zu belassen, da diese durch die Abdeckungen 122 und 124 nicht sichtbar sind.

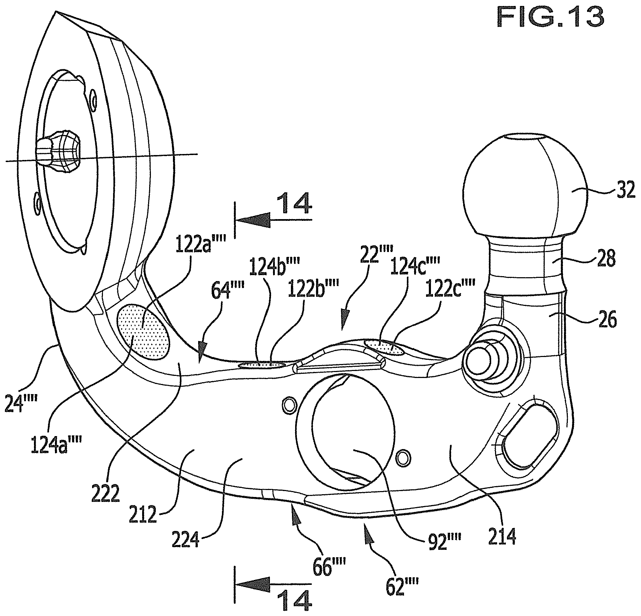

Ein fünftes Ausführungsbeispiel, dargestellt in Fig. 13, umfasst beispielsweise einen Ankuppelarm 22"", welcher ähnlich wie beim ersten Ausführungsbeispiel ausgebildet ist und eine Strebenstruktur 62"" mit einer oberen Längsstrebe 64"" sowie einer unteren Längsstrebe 66"" aufweist, die allerdings durch Verbindungswände 212 und 214 vorzugsweise einstückig miteinander verbunden sind, wobei die Verbindungswand 212 sich an den ersten Endbereich 24"" anschließt und sich bis zu dem Freiraum 92"" erstreckt und die Verbindungswand 214 sich zwischen dem Freiraum 92"" und dem zweiten Endbereich 96 erstreckt.

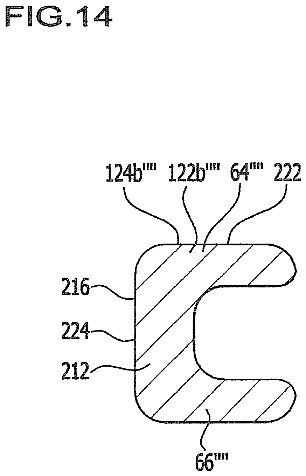

In diesem Fall hat der Ankuppelarm 22"", wie beispielsweise in Fig. 14 dargestellt eine C-ähnliche Querschnittsform mit der Verbindungswand 212 beziehungsweise aber auch der Verbindungswand 214 als Verbindung zwischen den Längsstreben 64"" und 66"".

Bei dieser Ausführung des Ankuppelarms 22"" ist beispielsweise - wie in Fig. 14 dargestellt - vorgesehen, die Kräfte in Krafterfassungsbereichen 122a"", 122b"" und 122cʺʺ über auf sich quer zu der vertikalen Längsmittelebene 16 erstreckenden Außenseiten 222 liegenden Einwirkungsflächen 124a"", 124b"" und 124c"" zu erfassen, die in der Arbeitsstellung auf einer der Fahrbahn 34 abgewandten Seite der ersten Längsstrebe 64 liegen, so dass die Sensoren diesen Einwirkungsflächen 124a"", 124b"" und 124c"" zugewandt angeordnet werden können, wobei die Anordnung der Sensoren 132 in gleicher Weise erfolgt und deren Funktionsweise dieselbe ist, wie im Zusammenhang mit den voranstehenden Ausführungsbeispielen beschrieben.

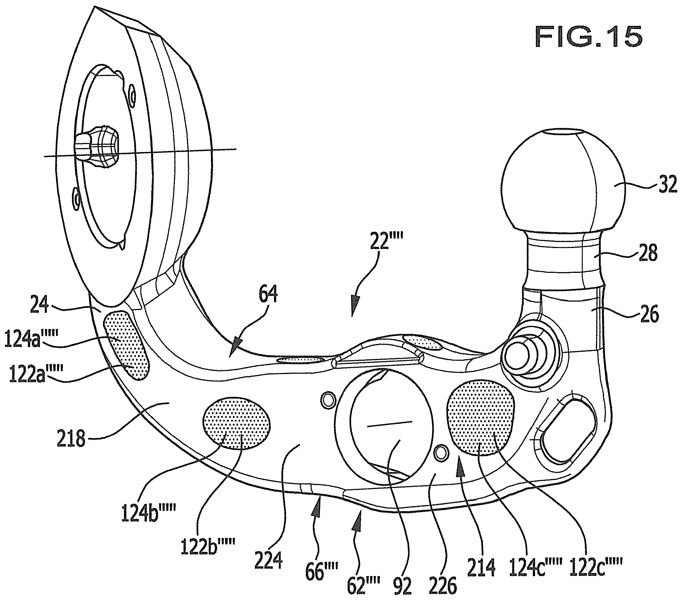

Bei einem sechsten Ausführungsbeispiel, dargestellt in Fig. 15, sind beispielsweise die Krafterfassungsbereiche 122aʺ‴ und 122bʺ‴ in der Verbindungswand 212 angeordnet und der Erfassungsbereich 122c‴ʺ in der Verbindungswand 214, wobei die zu den Krafterfassungsbereichen 122ʺ‴ gehörenden Einwirkungsflächen 124a‴ʺ, 124bʺ‴ und 124cʺ‴ auf den sich ungefähr parallel zur vertikalen Längsmittelebene 16 erstreckenden Außenseiten 224 und 226 der Verbindungswände 212 und 214 liegen.

Hinsichtlich der übrigen Merkmale, insbesondere der Anordnung der Sensoren 132 relativ zu den Einwirkungsflächen 124 und der übrigen Merkmale der Anhängekupplung wird vollinhaltlich auf die Ausführungen zu den voranstehenden Ausführungsbeispielen Bezug genommen.

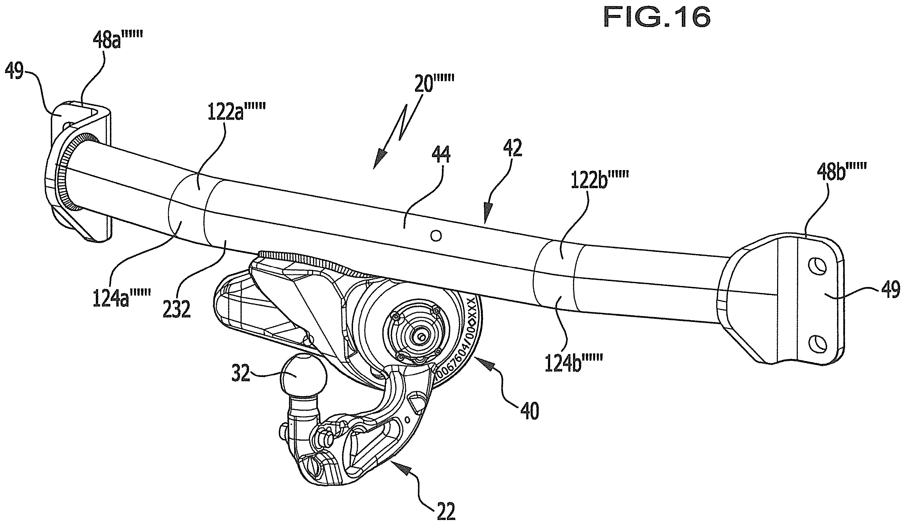

Bei einem siebten Ausführungsbeispiel, dargestellt in Fig. 16, sind die Krafterfassungsbereiche 122a und 122b nicht am Kugelhals 22 angeordnet, sondern an dem Querträger 44 der Trägereinheit 42 und erfassen die vom Kugelhals 22 über die Lagereinheit 40 in die Trägereinheit 42 eingeleiteten Kräfte im Bereich des Querträgers, und zwar der Krafterfassungsbereiche 122aʺʺʺ und 122b""" desselben, wobei eine Außenseite oder Umfangsseite 232 des Querträgers in den Krafterfassungsbereichen 122a""" und 122b""" die jeweiligen Einwirkungsflächen 124a""" und 124b""" bildet.

Über die diesen Einwirkungsflächen 124a""" und 124b""" zugeordneten Sensoren 132 besteht die Möglichkeit, sämtliche, auf den Querträger 44 wirkende Kräfte in den verschiedensten Richtungen zu erfassen und somit auch die auf den Kugelhals 22 über die Kupplungskugel 32 einwirkenden Kräfte zu erfassen, da der Querträger 44 diese Kräfte auf die Seitenträger 48a""" und 48b überträgt, die in diesem Fall nicht parallel zur Längsmittelebene 16 verlaufen, sondern beispielsweise mit Flanschen 49 an dem Heckbereich 14 der Karosserie 12 montierbar sind.

## Patentansprüche

1. Heckseitig an einer Fahrzeugkarosserie (14) montierbare Kupplungseinheit (20), die eine Trägereinheit (42) umfasst, welche ihrerseits von einer Stoßfängereinheit (56) verdeckt an der Fahrzeugkarosserie (12) montierbar ist, und die einen von der Trägereinheit (42) gehaltenen Ankuppelarm (22) zum Ankuppeln des Anhängers oder des Hecklastenträgers umfasst, wobei an mechanisch durch den angekuppelten Anhänger oder den angekuppelten Hecklastenträger belasteten Abschnitten der Kupplungseinheit (20) mindestens ein Krafterfassungsbereich (122) vorgesehen ist, in welchem ein diesem Krafterfassungsbereich (122) zugeordneter Sensor (132) mittels des magnetoelastischen Effekts die auf diesen Krafterfassungsbereich (122) einwirkende mechanische Belastung erfasst,
wobei der mindestens eine Krafterfassungsbereich (122) an dem Ankuppelarm (22) vorgesehen ist, wobei der Ankuppelarm (22) eine Tragstruktur (60) aufweist, die mit einem ersten Endbereich (24) mit der Trägereinheit (42) verbunden ist und die an einem zweiten Endbereich (26) ein Kuppelelement (32), trägt, wobei die Tragstruktur (60) eine den ersten Endbereich (24) mit dem zweiten Endbereich (26) verbindende und den zweiten Endbereich (26) relativ zum ersten Endbereich (24) abstützende Strebenstruktur (62) umfasst, welche sich in der Arbeitsstellung (A) des Ankuppelarms (22) in einer geometrischen und sich zu einer Mittelachse (58) des Kupplungselements (32) parallel erstreckenden Mittelfläche (80) ausdehnt und welche jeweils von einem Endbereich (24) zum anderen Endbereich (26) verlaufende Längsstreben (64, 66) aufweist, zwischen denen sich mindestens ein quer zu den Längsstreben (64, 66) verlaufendes Verbindungselement (82, 84, 86, 88, 212) erstrecken und wobei zwischen den Längsstreben (64, 66) mindestens ein sich quer zu der geometrischen Mittelfläche (80) erstreckender Freiraum (92, 94, 96, 98, 112, 114, 116) liegt.

2. Kupplungseinheit nach Anspruch 1, **dadurch gekennzeichnet, dass** der mindestens eine Krafterfassungsbereich (122) eine Einwirkungsfläche (124) aufweist, über welche der Sensor (132) ein Magnetfeld in eine die Einwirkungsfläche (124) tragende und der einwirkenden mechanische Belastung ausgesetzte Detektionsschicht (126) des Krafterfassungsbereichs (122) einkoppelt, um mittels des magnetoelastischen Effekts die auf diese Detektionsschicht (126) wirkende Belastung zu erfassen.

3. Kupplungseinheit nach Anspruch 1 oder 2, **dadurch gekennzeichnet, dass** die dem Krafterfassungsbereich (122) zugeordnete Einwirkungsfläche (124) an einer Außenseite (222, 224, 226) des Ankuppelarms (22) liegt, dass insbesondere die Außenseite (222) in einer Arbeitsstellung (A) des Ankuppelarms (22) ungefähr quer zu einer vertikalen Längsmittelebene (16) des Ankuppelarms (22) verläuft.

4. Kupplungseinheit nach einem der voranstehenden Ansprüche, **dadurch gekennzeichnet, dass** die dem Krafterfassungsbereich (122) zugeordnete Einwirkungsfläche (124) in einem von dem Ankuppelarm (22) gebildeten Freiraum (96, 94, 98) desselben liegt.

5. Kupplungseinheit nach einem der voranstehenden Ansprüche, **dadurch gekennzeichnet, dass** sich die Strebenstruktur (62) in der Arbeitsstellung (A) beiderseits der Mittelfläche (80) ausdehnt.

6. Kupplungseinheit nach einem der voranstehenden Ansprüche, **dadurch gekennzeichnet, dass** der Krafterfassungsbereich (122) und die Einwirkungsfläche (124) an einer der Längsstreben (64, 66) angeordnet sind.

7. Kupplungseinheit nach einem der voranstehenden Ansprüche, **dadurch gekennzeichnet, dass** der Krafterfassungsbereich (122) und die Einwirkungsfläche (124) an einem Verbindungselement (82, 84, 86, 88, 212) angeordnet sind.

8. Kupplungseinheit nach einem der voranstehenden Ansprüche, **dadurch gekennzeichnet, dass** die Einwirkungsfläche (124) an einer Außenseite der Tragstruktur (60) angeordnet ist.

9. Kupplungseinheit nach einem der voranstehenden Ansprüche, **dadurch gekennzeichnet, dass** die Einwirkungsfläche (124) an einer dem Freiraum (96, 94, 98) zugewandten Seite der Tragstruktur (60) angeordnet ist.

10. Kupplungseinheit nach einem der voranstehenden Ansprüche, **dadurch gekennzeichnet, dass** der Krafterfassungsbereich (122) und die Einwirkungsfläche (124) am ersten Endbereich (24) angeordnet sind.

11. Kupplungseinheit nach einem der voranstehenden Ansprüche, **dadurch gekennzeichnet, dass** der Krafterfassungsbereich (122) und die Einwirkungsfläche (124) zwischen dem ersten und zweiten Endbereich (24, 26) angeordnet sind.

12. Kupplungseinheit nach einem der voranstehenden Ansprüche, **dadurch gekennzeichnet, dass** mehrere Krafterfassungsbereiche (122) an einem oder mehreren belasteten Abschnitten oder verteilt auf mehrere belastete Abschnitte vorgesehen sind, dass insbesondere in verschiedenen Krafterfassungsbereichen (122) die Belastungen mittels des magnetoelastischen Effekts mit einem Schwerpunkt auf unterschiedliche Erfassungsrichtungen erfasst werden.

13. Kupplungseinheit nach einem der voranstehenden Ansprüche, **dadurch gekennzeichnet, dass** der jeweilige Sensor (132) Magnetpole (142, 144, 146) mit der Einwirkungsfläche (124) zugewandten Kopfflächen (162, 164, 166) aufweist, dass insbesondere die Kopfflächen (162, 164, 166) im Abstand von der Einwirkungsfläche (124) angeordnet sind, dass insbesondere dass zwischen der Einwirkungsfläche (124) und der jeweiligen Kopffläche (162, 164, 166) ein Spalt (172, 174, 176) aus nichtmagnetischem Material vorgesehen ist, dass insbesondere der Spalt (172, 174, 176) durch eine nichtmagnetische Materialschicht (178) gebildet ist, dass insbesondere der Spalt (172, 174, 176) durch eine Kunststoffschicht (178) gebildet ist.

14. Kupplungseinheit nach einem der voranstehenden Ansprüche, **dadurch gekennzeichnet, dass** der Sensor (132) relativ zu der jeweiligen Einwirkungsfläche (124) mittels einer auf den Sensor (132) wirkenden Haltevorrichtung (136) fixiert ist, dass insbesondere die Haltevorrichtung (136) den Sensor (132) in Richtung der Einwirkungsfläche (124) mit einer Kraft beaufschlagt.

15. Kupplungseinheit nach einem der voranstehenden Ansprüche, **dadurch gekennzeichnet, dass** die Detektionsschicht (126) durch ferromagnetisches Material gebildet ist, dass insbesondere die Detektionsschicht (126) Chromstahl umfasst.

16. Kupplungseinheit nach einem der voranstehenden Ansprüche, **dadurch gekennzeichnet, dass** die Detektionsschicht (126) durch das Material des Krafterfassungsbereichs (122) selbst gebildet ist.

## Claims

1. Coupling unit (20) that is mountable on the rear end of a vehicle body (14) and comprises a carrier unit (42) which, for its part, is mountable on the vehicle body (12) hidden by a bumper unit (56) and which comprises a coupling arm (22) held by the carrier unit (42)for coupling a trailer or a rear load carrier, wherein at least one force detecting region (122) is provided on sections of the coupling unit (20) that are mechanically loaded by the coupled trailer or the coupled rear load carrier in which a sensor (132) associated with this force detecting region (122) detects the mechanical load acting on this force detecting region (122) by means of the magneto-elastic effect,
wherein the at least one force detecting region (122) is provided on the coupling arm (22), wherein the coupling arm (22) comprises a carrying structure (60) which is connected by a first end region (24) to the carrier unit (42) and carries a coupling element (32) at a second end region (26), wherein the carrying structure (60) comprises a bracing structure (62) which connects the first end region (24) to the second end region (26) and supports the second end region (26) relative to the first end region (24) which, in the working position (A) of the coupling arm (22), extends in a geometrical central planar surface (80) which itself extends in parallel with a central axis (58) of the coupling element (32) and which comprises longitudinal struts (64, 66) that each run from one end region (24) to the other end region (26) and between which there extends at least one connecting element (82, 84, 86, 88, 212) that runs transversely relative to the longitudinal struts (64, 66) and wherein at least one free space (92, 94, 96, 98, 112, 114, 116) extending transversely relative to the geometrical central planar surface (80) lies between the longitudinal struts (64, 66).

2. A coupling unit according to Claim 1, **characterized in that** the at least one force detecting region (122) comprises an effective surface (124) by means of which the sensor (132) couples a magnetic field into a detection layer (126) of the force detecting region (122) which carries the effective surface (124) and is subjected to the acting mechanical load in order to detect the load that is acting on this detection layer (126) by means of the magneto-elastic effect.

3. A coupling unit according to Claim 1 or 2, **characterized in that** the effective surface (124) that is associated with the force detecting region (122) is located on an outer surface (222, 224, 226) of the coupling arm (22), **in that** in particular in a working position (A) of the coupling arm (22), the outer surface (222) runs approximately transverse to a vertical longitudinal centre plane (16) of the coupling arm (22).

4. A coupling unit according to any of the preceding Claims, **characterized in that** the effective surface (124) associated with the force detecting region (122) is located in a free space (96, 94, 98) thereof that is formed by the coupling arm (22).

5. A coupling unit according to any of the preceding Claims, **characterized in that** the bracing structure (62) in the working position (A) extends on both sides of the central planer surface (80).

6. A coupling unit according to any of the preceding Claims, **characterized in that** the force detecting region (122) and the effective surface (124) are arranged on one of the longitudinal struts (64, 66).

7. A coupling unit according to any of the preceding Claims, **characterized in that** the force detecting region (122) and the effective surface (124) are arranged on a connecting element (82, 84, 86, 88, 212).

8. A coupling unit according to any of the preceding Claims, **characterized in that** the effective surface (124) is arranged on an outer surface of the carrying structure (60).

9. A coupling unit according to any of the preceding Claims, **characterized in that** the effective surface (124) is arranged on a side of the carrying structure (60) which faces the free space (96, 94, 98).

10. A coupling unit according to any of the preceding Claims, **characterized in that** the force detecting region (122) and the effective surface (124) are arranged at the first end region (24).

11. A coupling unit according to any of the preceding Claims, **characterized in that** the force detecting region (122) and the effective surface (124) are arranged between the first and second end regions (24, 26).

12. A coupling unit according to any of the preceding Claims, **characterized in that** a plurality of force detecting regions (122) are provided on one or more loaded sections or are distributed over a plurality of loaded sections, **in that** in particular the loads are detected in different force detecting regions (122) by means of the magneto-elastic effect with an emphasis on differing directions of detection.

13. A coupling unit according to any of the preceding Claims, **characterized in that** the respective sensor (132) comprises magnetic poles (142, 144, 146) having header surfaces (162, 164, 166) which face the effective surface (124), **in that** in particular the header surfaces (162, 164, 166) are arranged at a spacing from the effective surface (124), **in that** in particular a gap (172, 174, 176) of non-magnetic material is provided between the effective surface (124) and the respective header surfaces (162, 164, 166), **in that** in particular the gap (172, 174, 176) is formed by a layer of non-magnetic material (178), **in that** in particular the gap (172, 174, 176) is formed by a layer of plastics material (178).

14. A coupling unit according to any of the preceding Claims, **characterized in that** the sensor (132) is fixed relative to the respective effective surface (124) by means of a holding device (136) that acts on the sensor (132), **in that** in particular the holding device (136) subjects the sensor (132) to a force in the direction of the effective surface (124).

15. A coupling unit according to any of the preceding Claims, **characterized in that** the detection layer (126) is formed by ferro-magnetic material, **in that** in particular the detection layer (126) comprises chromium steel.

16. A coupling unit according to any of the preceding Claims, **characterized in that** the detection layer (126) is formed by the material of the force detecting region (122) itself.

## Revendications

1. Unité d'attelage (20) pouvant être montée côté arrière sur une carrosserie de véhicule (14), qui comprend une unité de support (42) laquelle peut être montée quant à elle sur la carrosserie de véhicule (12) de manière dissimulée par une unité de pare-chocs (56), et qui comprend un bras d'accouplement (22) maintenu par l'unité de support (42), destiné à accoupler la remorque ou le support de charges arrière, dans laquelle est prévue, sur des sections, soumises à une contrainte mécanique par la remorque accouplée ou le support de charges arrière accouplé, de l'unité d'attelage (20), au moins une zone de détection de force (122), dans laquelle un capteur (132) associé à ladite zone de détection de force (122) détecte la contrainte mécanique agissant sur ladite zone de détection de force (122) au moyen de l'effet magnéto-élastique,
dans laquelle l'au moins une zone de détection de force (122) est prévue sur le bras d'accouplement (22), dans laquelle le bras d'accouplement (22) présente une structure porteuse (60), qui est reliée à l'unité de support (42) par une première zone d'extrémité (24) et qui supporte un élément d'attelage (32) sur une deuxième zone d'extrémité (26), dans laquelle la structure porteuse (60) comprend une structure de nervures (62) reliant la première zone d'extrémité (24) à la deuxième zone d'extrémité (26) et soutenant la deuxième zone d'extrémité (26) par rapport à la première zone d'extrémité (24), laquelle s'étend, dans la position de travail (A) du bras d'accouplement (22), dans une surface centrale (80) géométrique et s'étendant de manière parallèle par rapport à un axe central (58) de l'élément d'attelage (32) et laquelle présente des nervures longitudinales (64, 66) s'étendant respectivement depuis une zone d'extrémité (24) vers l'autre zone d'extrémité (26), entre lesquelles s'étend au moins un élément de liaison (82, 84, 86, 88, 212) s'étendant de manière transversale par rapport aux nervures longitudinales (64, 66) et dans laquelle au moins un espace libre (92, 94, 96, 98, 112, 114, 116) s'étendant de manière transversale par rapport à la surface centrale (80) géométrique se situe entre les nervures longitudinales (64, 66).

2. Unité d'attelage selon la revendication 1, **caractérisée en ce que** l'au moins une zone de détection de force (122) présente une surface active (124), par l'intermédiaire de laquelle le capteur (132) injecte un champ magnétique dans une couche de détection (126), supportant la surface active (124) et soumise à la contrainte mécanique active, de la zone de détection de force (122) pour détecter la contrainte agissant sur ladite couche de détection (126) au moyen de l'effet magnéto-élastique.

3. Unité d'attelage selon la revendication 1 ou 2, **caractérisée en ce que** la surface active (124) associée à la zone de détection de force (122) se situe sur un côté extérieur (222, 224, 226) du bras d'accouplement (22), qu'en particulier le côté extérieur (222) s'étend dans une position de travail (A) du bras d'accouplement (22) approximativement de manière transversale par rapport à un plan central longitudinal vertical (16) du bras d'accouplement (22).

4. Unité d'attelage selon l'une quelconque des revendications précédentes, **caractérisée en ce que** la surface active (124) associée à la zone de détection de force (122) se situe dans un espace libre (96, 94, 98) formé par le bras d'accouplement (22) de celle-ci.

5. Unité d'attelage selon l'une quelconque des revendications précédentes, **caractérisée en ce que** la structure de nervures (62) s'étend dans la position de travail (A) de part et d'autre de la surface centrale (80) .

6. Unité d'attelage selon l'une quelconque des revendications précédentes, **caractérisée en ce que** la zone de détection de force (122) et la surface active (124) sont disposées sur une des nervures longitudinales (64, 66).

7. Unité d'attelage selon l'une quelconque des revendications précédentes, **caractérisée en ce que** la zone de détection de force (122) et la surface active (124) sont disposées sur un élément de liaison (82, 84, 86, 88, 212).

8. Unité d'attelage selon l'une quelconque des revendications précédentes, **caractérisée en ce que** la surface active (124) est disposée sur un côté extérieur de la structure porteuse (60).

9. Unité d'attelage selon l'une quelconque des revendications précédentes, **caractérisée en ce que** la surface active (124) est disposée sur un côté, tourné vers l'espace libre (96, 94, 98), de la structure porteuse (60).

10. Unité d'attelage selon l'une quelconque des revendications précédentes, **caractérisée en ce que** la zone de détection de force (122) et la surface active (124) sont disposées sur la première zone d'extrémité (24) .

11. Unité d'attelage selon l'une quelconque des revendications précédentes, **caractérisée en ce que** la zone de détection de force (122) et la surface active (124) sont disposées entre la première et la deuxième zone d'extrémité (24, 26).

12. Unité d'attelage selon l'une quelconque des revendications précédentes, **caractérisée en ce que** plusieurs zones de détection de force (122) sont prévues sur une ou plusieurs sections soumises à une contrainte ou de manière répartie sur plusieurs sections soumises à une contrainte, que les contraintes sont détectées au moyen de l'effet magnéto-élastique avec un accent particulier sur différentes directions de détection en particulier dans différentes zones de détection de force (122) .

13. Unité d'attelage selon l'une quelconque des revendications précédentes, **caractérisée en ce que** le capteur (132) respectif présente des pôles magnétiques (142, 144, 146) avec des surfaces de tête (162, 164, 166) tournées vers la surface active (124), qu'en particulier les surfaces de tête (162, 164, 166) sont disposées à distance de la surface active (124), qu'en particulier une fente (172, 174, 176) composée d'un matériau non magnétique est prévue entre la surface active (124) et la surface de tête (162, 164, 166) respective, qu'en particulier la fente (172, 174, 176) est formée par une couche de matériau non magnétique (178), qu'en particulier la fente (172, 174, 176) est formée par une couche en matière plastique (178).

14. Unité d'attelage selon l'une quelconque des revendications précédentes, **caractérisée en ce que** le capteur (132) est bloqué par rapport à la surface active (124) respective au moyen d'un dispositif de maintien (136) agissant sur le capteur (132), qu'en particulier le dispositif de maintien (136) soumet le capteur (132) à l'action d'une force en direction de la surface active (124) .

15. Unité d'attelage selon l'une quelconque des revendications précédentes, **caractérisée en ce que** la couche de détection (126) est formée par un matériau ferromagnétique, qu'en particulier la couche de détection (126) comprend de l'acier chromé.

16. Unité d'attelage selon l'une quelconque des revendications précédentes, **caractérisée en ce que** la couche de détection (126) est formée par le matériau de la zone de détection de force (122) lui-même.
